# EUROPÄISCHE PATENTSCHRIFT

(11) **EP 0 271 787 B1**
(45) Veröffentlichungstag und Bekanntmachung des Hinweises auf die Patenterteilung: **05.01.1994**
(21) Anmeldenummer: 87118001.4
(22) Anmeldetag: 05.12.1987
(51) Int. Cl.: G08B 21/00

(54) **Personenschutzfunkgerät**
Personal-protection radio apparatus
Appareil radio à protection de personnel

(30) Priorität: 18.12.1986 DE 3643236
(43) Veröffentlichungstag der Anmeldung: 22.06.1988
(73) Patentinhaber: Selectronic Funk- und Sicherheitstechnik GmbH, D-65510 Hünstetten (DE)
(72) Erfinder: Ormanns, Siegfried, D-4650 Gelsenkirchen (DE); Schwalb, Hans Joachim, D-4390 Gladbeck (DE)
(74) Vertreter: Zenz, Joachim Klaus, Dipl.-Ing.

(56) Entgegenhaltungen:
- EP-A- 0 093 463
- DE-B- 1 027 143
- FR-A- 1 555 306
- FR-A- 1 583 845
- INTERNATIONALE ELEKTRONISCHE RUNDSCHAU, Band 29, Nr. 5, Mai 1975, Seiten 93-95, Berlin, DE; A. RICHTSCHEID: "Ein einfacher Sender als Markierungsgerät"
- PATENT ABSTRACTS OF JAPAN, Band 7, Nr. 210 (P-223)[1355], 16. September 1983 & JP-A-58-103 015
- FUNKSCHAU, Band 37, Nr. 1, Januar 1965, Seiten 15-17, München, DE; H.-G. BEIER et al.: "Das automatische Laden elektrolytdichter Blei-Akkumulatoren"
- FUNKSCHAU, Band 46, Nr. 26, 20. Dezember 1974, Seiten 1025-1027, München, DE; W. FRITZSCHE: "Sender-Empfänger-Systeme für die Menschenrettung aus Lawinen"

## Beschreibung

Die Erfindung bezieht sich auf das Gebiet des Personenschutzes und der Personenortung, insbesondere auf ein Personenschutzfunkgerät, das von der zu schützenden Person an einer Haltevorrichtung mitgeführt wird und einen von einer geräteeigenen Stromquelle versorgten Sender und eine Antennenanordnung enthält.

Dem Personenschutz oder Arbeitsschutz dienende Funkanlagen lassen sich ihrer Funktion entsprechend in zwei Kategorien einteilen. Bei der einen Kategorie dient ein eigenerregter, in der Regel permanent aktiver Sender, der von der zu schützenden Person entweder in einem Schuh, einem Gürtel oder bei Einsatz im Untertagebetrieben in der Kopfleuchte mitgeführt wird, zur Markierung der Person (DE-P 20 26 167). Der permanent aktive Sender strahlt ständig ein Hochfrequenzsignal aus, das bei Empfang durch eine im Gefahren- oder Kontrollbereich in der Regel stationär angeordnete Empfangsantenne einen Signalempfänger und die mit diesem verbundene Schalteinrichtung betätigt. Aufgrund des permanenten Energieverbrauchs ist selbst bei modernen, leistungsstarken Batterien die Betriebsdauer begrenzt. Die Stromquelle und deren Energieverbrauch bilden bei längerem, kontinuierlichem Betrieb ein erhebliches Betriebsrisiko, insbesondere bei Geräten, die dem Personenschutz und der Ortung von verschütteten oder eingeschlossenen Personen in Untertagebetrieben, Baubetrieben oder auch in lawinengefährdeten Bereichen dienen. Aus der Internationalen Elektronischen Rundschau Band 29, Nr. 5 (1975), Seiten 93-95 (Richtscheid) ist ein in einen Schuh eingebauter Sender als Markierungsgerät bekannt, dessen Stromquelle als Schweißbatterie ausgebildet ist. Der Sender ist dort permanent mit der Schweißbatterie verbunden. Der innere Strompfad über die Schweißbatterie wird aber nur über einen Elektrolyten (Schweiß oder Feuchtigkeit im Schuh) geschlossen. Der Energieverbrauch der Batterie soll auf diese Weise auf die Einsatzdauer, d.h. die Benutzung des Schuhs begrenzt werden. Die Lebensdauer der Batterie ist durch das Aufbrauchen einer Metallelektrode begrenzt.

Bei der zweiten Kategorie handelt es sich um sogenannte passive Gefahrensignalgeber ohne eigene Energiequelle. Der Gefahrensignalgeber enthält einen Sendeempfänger, der in einen vorgegebenen Sendebereich eines Senders durch eine bestimmte Sendefrequenz erregt wird und ein Antwortsignal auf einer anderen Frequenz ausstrahlt. Ein Gefahrensignalempfänger entwickelt aus der Antwortfrequenz Alarm- oder Abschaltsignale. Der Vorteil dieser Geräte liegt in der Unabhängigkeit des Sendeempfängers von einer Energieversorgung. Der wesentliche Nachteil rein passiver Sendeempfänger liegt bekanntlich in ihrer zu geringen Reichweite. Aufgrund dieses Nachteils ist der Einsatz rein passiver Sendeempfänger zur Markierung verschütteter Personen insbesondere im Untertagebetrieb zu risikoreich.

Der Erfindung liegt die Aufgabe zugrunde, ein Personenschutzfunkgerät der eingangs genannten Art zu schaffen, das die Vorteile einer großen Reichweite, einer kompakten Bauweise, einer hohen betrieblichen Zuverlässigkeit und einer langen wartungsfreien Einsatzdauer vereinigt.

Diese Aufgabe wird erfindungsgemäß dadurch gelöst, daß die geräteeigene Stromquelle ein aufladbarer Akkumulator ist, daß das Personenschutzfunkgerät eine Generatoranordnung enthält, daß die Generatoranordnung mit dem Akkumulator verbunden ist und eine solche Ausbildung hat, daß sie den Akkumulator während des betrieblichen Einsatzes des Geräts auflädt, daß die Generatoranordnung einen piezoelektrischen Wandler aufweist und daß der piezoelektrische Wandler im Sohlen- oder Absatzbereich eines Schuhs oder Stiefels derart eingebaut ist, daß er den Sohlen- oder Absatzdruck beim Gehen der zu schützenden Person teilweise aufnimmt und in eine Spannung zur Aufladung des Akkumulators umsetzt.

Bei der Erfindung werden bewährte Akkumulatorzellen benutzt, die eine praktische gleichbleibende und von den Umständen ihres Einsatzes weitgehend unabhängige Spannungs- und Energieabgabe gewährleisten. Ihre Betriebsdauer wird von der Generatoranordnung durch automatisches Aufladen im betrieblichen Einsatz verlängert.

Die Verwendung von wiederaufladbaren Akkumulatoren ist vor allem in transportablen, elektrisch angetriebenen Geräten, beispielsweise in transportablen Computern üblich, um das elektronische Gerät von einer stationären Stromquelle unabhängig zu machen. Gemäß Patent Abstracts of Japan, Bd. 7, Nr. 210 (p-223) [1355], 16. September 1983 kann bei einem tragbaren Computer der Akkumulator über einen im Computer enthaltenen Generator aufgeladen werden, der die mechanischen Tastenbetätigungen auf einer Tastatur über einen mechanischen Impulsgeber und einen piezoelektrischen Wandler in Aufladeimpulse umsetzt. Bei einer elektrischen Uhr ist gemäß DE-B-1 027 143 als Ladestromquelle ein durch Relativbewegung mindestens zweier Uhrteile stromerzeugender Generator vorgesehen.

Aus FR-A-1 555 306 ist eine piezoelektrische Generatoranordnung bekannt, die beim Gehen im Absatz eines Schuhs aufgenommene mechanische Energie in elektrische Energie zum Betreiben einer dem Schuh zugeordneten dekorativen Lampe umwandelt.

In herkömmlichen Personenschutzfunkgeräten werden bisher grundsätzlich nicht-aufladbare Batterien verwendet, so beispielsweise die oben erwähnte Schweißbatterie, die sich im betrieblichen Einsatz entlädt, oder Akkumulatoren, die nicht während des betrieblichen Einsatzes aufgeladen werden können. Die Erfindung verwendet einen aufladbaren Akkumulator und integriert in das Personenschutzfunkgerät eine Generatoranordnung, wodurch die Zuverlässigkeit und die Betriebsdauer durch ständige betriebliche Aufladung beträchtlich erhöht werden. Dadurch kann die große Reichweite von eigenversorgten Personenschutzfunkgeräten genutzt werden, ohne daß die Einsatzdauer dieser zuverlässigen Geräte merklich eingeschränkt wird. Die Einsatzmöglichkeiten der Personenschutzfunkgeräte werden dadurch nicht unerheblich erweitert. Alle Markierungs- und Ortungsaufgaben, insbesondere solche unter erschwerten Umständen in untertägigen Gewinnungsbetrieben, werden abgedeckt. Verschüttete und eingeschlossene Personen können daher bei Mitführung des neuen Personenschutzfunkgerätes auch aus großen Distanzen geortet und gegebenenfalls rasch befreit werden.

Die erfindungsgemäße Generatoranordnung weist einen piezoelektrischen Wandler auf. Dieser ist im Sohlen- oder Absatzbereich eines Schuhs oder Stiefels derart eingebaut, daß er den Sohlen- oder Absatzdruck beim Gehen der zu schützenden Person teilweise aufnimmt und in eine Spannung zur Aufladung des Akkumulators umsetzt.

Die im Gerät befindlichen, beispielsweise als kleine Knopfzellen ausgebildeten Akkumulatorzellen benötigen eine bestimmte Auflade-Mindestspannung. Diese Mindestspannung kann unter bestimmten Umständen nicht von einer einzigen piezoelektrischen Zelle aufgebracht werden. Daher sieht die Erfindung vor, daß mehrere piezoelektrische Zellen parallel und/oder in Reihe geschaltet sind.

Die Generatoranordnung kann zusätzlich zu dem zuvor genannten Energieerzeugern eine Induktionsspule aufweisen, in der durch Verkettung mit einem äußeren Feld ein Strom zur Aufladung des Akkumulators induzierbar ist. Im Untertageeinsatz kann ein solches Feld beispielsweise in einer Kontrollstation aufgebaut sein und beim Durchschreiten einer Kontrollzone gegebenenfalls in Verbindung mit einer Prüfung des Personenschutzfunkgeräts wirksam werden.

Zur Vermeidung von Überspannungen bei der Aufladung des Akkumulators weist die Generatorschaltung in Weiterbildung der Erfindung eine Spannungs-Verstärker und/oder Begrenzungsschaltung auf.

Im folgenden wird die Erfindung anhand eines in der Zeichnung dargestellten Ausführungsbeispiels näher erläutert. In der Zeichnung zeigen:
- Fig. 1: ein schematisches Blockschaltbild eines Ausführungsbeispiels des erfindungsgemäßen Personenschutzfunkgeräts; und
- Fig. 2: eine Teilansicht auf einen in Untertagebetrieben verwendeten Arbeitsschuh, bei dem das erfindungsgemäße Personenschutzfunkgerät im Schuhabsatz eingebaut ist.

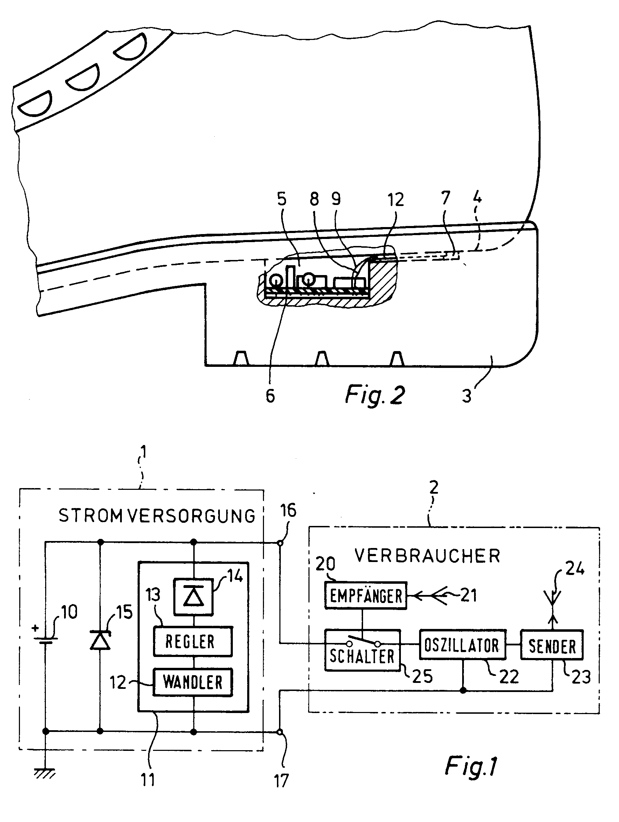

Das in Fig. 1 als Blockschaltbild dargestellte Personenschutzfunkgerät besteht aus einem Stromversorgungsteil 1 und einem Verbraucher 2.

Die Stromversorgung 1 weist als Stromquelle einen aufladbaren Akkumulator 10 in Form beispielsweise einer im Handel erhältlichen Knopfzelle und eine Generatoranordnung 11 auf. Letztere ist so ausgebildet und mit dem Akkumulator 10 verbunden, daß sie den Akkumulator mit der erforderlichen Ladespannung aufladen kann. Die Generatoranordnung 11 weist eine Wandler 12 auf, der so ausgebildet ist, daß er entweder nur auf ihn wirkende Druckenergie oder auch die von außen über ein geeignetes Feld auf ihn wirkende Energie in elektrische Energie zur Aufladung des Akkumulators 10 umzusetzen vermag. Der Wandler ist als piezoelektrischer Wandler ausgebildet, der in einer geeigneten Drucktasche (Fig. 2) im Absatzbereich eines Arbeitsstiefels angeordnet und dem Fersendruck des Benutzers im Betrieb ausgestzt wird.

Dem Wandler 12 nachgeschaltet ist eine in Fig. 1 mit Regler bezeichnete Komponente 13. Der Regler kann als Spannungsverstärker ausgebildet sein, um die im Wandler 12 erzeugte Spannung auf das für die Aufladung des Akkumulators 10 erforderlich Spannungsniveau anzuheben. Bei Ausführung des Wandlers als piezoelektrische Zelle oder als Reihenschaltung mehrerer piezoelektrischer Zellen kann die im Wandler erzeugte Spannung die notwendige Ladespannung unter Umständen deutlich übersteigen. In diesem Falle wirkt der Regler 13 vorzugsweise als Spannungsbegrenzer. Zur Generatoranordnung 11 gehört ferner ein Gleichrichter 14, der zum Regler und Wandler in Reihe liegt und eine Entladung des Akkumulators 10 über den Generatorstromzweig verhindert. In dem dargestellten Ausführungsbeispiel ist außerdem eine Zenerdiode 15 zur Begrenzung etwaiger Auflade-Überspannungen vorgesehen.

Der Verbraucher 2 ist an die beiden Pole 16, 17 der Stromversorgung 1 angeschaltet. Er weist einen Empfänger 20 mit Empfangsantenne 21, einen Oszillator 22, einen Sender 23 mit Sendeantenne 24 und einen vorzugsweise elektronischen Schalter 25 auf. Der Schalter 25 ist in dem beschriebenen Ausführungsbeispiel derart angeordnet, daß der Verbraucherstromkreis im Ruhezustand offen ist, also keine Entladung über den Verbraucher 2 stattfindet. Zu diesem; Zweck ist der Schalter 25 als Schließer ausgebildet, der nur bei geeigneter Ansteuerung über den Empfänger 20, d.h. bei Empfang eines geeigneten äußeren Rufsignals beispielsweise bei einer vorgegebenen Frequenz geschlossen wird. Ist der Schalter 25 geschlossen, so werden der Oszillator und der Sender an die Stromversorgung 1 angeschaltet und entnehmen dem Akkumulator 10 die zur Entwicklung eines geeigneten Sendesignals erforderliche elektrische Energie. Dieses Signal ist in der Praxis so stark, daß es zum Zwecke der Ortung von Verschütteten oder Eingeschlossenen noch etwa 10 m Haufwerk zuverlässig durchdringen kann. Bei diesem Ausführungsbeispiel ist der Verbraucher im normalen betrieblichen Einsatz stummgeschaltet und verbraucht keine Akkumulatorenergie. Erst Bei Aufruf und über die Dauer des Empfangs eines äußeren Aufrufsignals ist der Sender 23 aktiv und sendet sein Signal über die Sendeantenne 24. In alternativer Ausführung können die Komponenten 20, 22 und 23 auch mit einer bestimmten reduzierten Menge an elektrischer Energie gespeist werden, um einen permanenten Sendebetrieb bei niedriger Sendeleistung zu gewährleisten. In diesem Falle sollte der Schalter 25 eine Handbetätigung haben, die den Verbraucher außerhalb der Betriebszeiten, d.h. im Ruhezustand, vom Stromversorgungsteil 1 abtrennt.

In Fig. 2 ist das beschriebene Personenschutzfunkgerät eingebaut in einem Schuhabsatz 3 gezeigt.

In dem Schuhabsatz 3 ist unterhalb einer Brandsohle 4 eine Aufnahmemulde 5 vorgesehen, in der eine Platine 6, bestückt mit den elektrischen Komponenten des Geräts, einschließlich des als Knopfzelle ausgebildeten Akkumulatorelements 10, angeordnet ist.

Der piezoelektrische Wandler 12 ist, wie erwähnt, in einer Absatztasche 7 unmittelbar unter der Brandsohle 4 derart angeordnet, daß er über die Brandsohle 4 oder eine geeignete Druckmembran mit dem Fersendruck der zu schützenden Person belastet wird. Der Druckwandler ist über zwei Leitungen 8 und 9 mit dem negativen Pol des Akkumulators bzw. einem Anschluß eines geeignet ausgebildeten Reglers elektrisch verbunden.

## Patentansprüche

1. Personenschutzfunkgerät, das von der zu schützenden Person an einer Haltevorrichtung (3) mitgeführt wird und einen von einer geräteeigenen Stromquelle (10) versorgten Sender (23) und eine Antennenanordnung (21, 24) enthält,
**dadurch gekennzeichnet,**
daß die geräteeigene Stromquelle ein aufladbarer Akkumulator (10) ist, daß das Personenschutzfunkgerät eine Generatoranordnung (11) enthält, daß die Generatoranordnung mit dem Akkumulator (10) verbunden ist und eine solche Ausbildung hat, daß sie den Akkumulator während des betrieblichen Einsatzes des Geräts auflädt daß die Generatoranordnung einen piezoelektrischen Wandler (12) aufweist und daß der piezoelektrische Wandler (12) im Sohlen- oder Absatzbereich (3) eines Schuhs oder Stiefels derart eingebaut ist, daß er den Sohlen- oder Absatzdruck beim Gehen der zu schützenden Person teilweise aufnimmt und in eine Spannung zur Aufladung des Akkumulators (10) umsetzt.

2. Personenschutzfunkgerät nach Anspruch 1, dadurch gekennzeichnet, daß mehrere piezoelektrische Zellen parallel und/oder in Reihe geschaltet sind.

3. Personenschutzfunkgerät nach Anspruch 1, dadurch gekennzeichnet, daß die Generatoranordnung (11) zusätzlich eine Induktionsspule aufweist, in der durch Verkettung mit einem äußeren Feld ein Strom zur Aufladung des Akkumulators (10) induzierbar ist.

4. Personenschutzfunkgerät nach einem der Ansprüche 1 bis 3, dadurch gekennzeichnet, daß die Generatoranordnung (11) im Aufladebetrieb über eine Gleichrichterschaltung (14) an den Akkumulator (10) angeschaltet ist.

5. Personenschutzfunkgerät nach einem der Ansprüche 1 bis 4, dadurch gekennzeichnet, daß die Generatorschaltung (11) eine Spannungs-Verstärker und/oder Begrenzungsschaltung (13, 15) aufweist.

6. Personenschutzfunkgerät nach einem der Ansprüche 1 bis 5, dadurch gekennzeichnet, daß das Funksteuergerät einen auf wenigstens eine vorgegebene Frequenz ansprechenden Empfänger (20) aufweist, der Schaltmittel (25) zur Aktivierung des Senders (22, 23) betätigt, und daß die Schaltmittel im Versorgungsstromkreis (16, 17) des Senders angeordnet sind, und den Versorgungsstromkreis zwischen Akkumulator (10) und Sender (22, 23) schließen, wenn die wenigstens eine vorgegebene Frequenz vom Empfänger (20) empfangen wird.

7. Personenschutzfunkgerät nach Anspruch 6, dadurch gekennzeichnet, daß dem Empfänger (20) ein Decodierer zur Unterscheidung empfangener Frequenzen zugeordnet ist.

8. Personenschutzfunkgerät nach Anspruch 6 oder 7, dadurch gekennzeichnet, daß der Empfänger (20) als fremderregtes Bauelement ausgebildet ist, das die Schaltmittel (25) bei Empfang der vorgegebenen Frequenz umschaltet.

## Claims

1. Personal protection radio device which is carried by the person to be protected on a holding device (3) and includes a transmitter (23) powered by a current source specific to the device and an antennae arrangement (21,24), characterised in that the current source specific to the device is a rechargeable accumulator (10), that the personal protection radio device includes a generator arrangement (11), that the generator arrangement is connected to the accumulator (10) and is so constructed that it charges the accumulator during operational use of the device, that the generator arrangement has a piezo-electric converter (12) and that the piezo-electric converter (12) is so incorporated in the sole or heel region (3) of a shoe or boot that it partially absorbs the sole or heel pressure during walking of the person to be protected and converts it into a voltage for charging the accumulator (10).

2. Personal protection radio device as claimed in claim 1, characterised in that a plurality of piezo-electric cells are connected in parallel and/or in series.

3. Personal protection radio device as claimed in claim 1, characterised in that the generator arrangement (11) additionally has an induction coil in which a current may be induced by coupling with an external field to charge the accumulator (10).

4. Personal protection radio device as claimed in one of claims 1 to 3, characterised in that the generator arrangement (11) is connected to the accumulator (10) in charging operation via a rectifier circuit (14).

5. Personal protection radio device as claimed in one of claims 1 to 4, characterised in that the generator circuit (11) has a voltage amplifier and/or limiting circuit (13,15).

6. Personal protection radio device as claimed in one of claims 1 to 5, characterised in that the radio control device has a receiver (20) responsive to at least one predetermined frequency which actuates the switching means (25) to activate the transmitter (22,23) and that the switching means are arranged in the supply current circuit (16,17) of the transmitter and closes the supply current circuit between the accumulator (10) and transmitter (22,23) when the at least one predetermined frequency is received by the receiver (20).

7. Personal protection radio device as claimed in claim 6, characterised in that a decoder for discriminating received frequencies is associated with the receiver (20).

8. Personal protection radio device as claimed in claim 6 or 7, characterised in that the receiver (20) is constructed as a separately excited unit which switches over the switching means (25) on reception of the predetermined frequency.

## Revendications

1. Appareil radio de protection des personnes, porté sur un dispositif de fixation (3), par la personne à protéger, et contenant un émetteur (23), alimenté par une source de courant électrique (10) propre à l'appareil et un dispositif d'antenne (21, 24), caractérisé en ce que la source de courant électrique, propre à l'appareil, est un accumulateur (10) rechargeable, en ce que l'appareil radio de protection des personnes contient un dispositif générateur (11), en ce que le dispositif générateur est relié à l'accumulateur (10) et est d'une configuration telle qu'il recharge l'accumulateur pendant l'utilisation elle-même, en ce que le dispositif générateur présente un convertisseur piézoélectrique (12) et en ce que le convertisseur piézoélectrique (12) est intégré dans la zone de semelle ou de talon (3) d'une chaussure ou d'une botte, de telle manière qu'il capte partiellement la pression sur la semelle ou le talon lors de la marche de la personne à protéger et opère une conversion en une tension, en vue de recharger l'accumulateur (10).

2. Appareil radio de protection des personnes selon la revendication 1, caractérisé en ce que plusieurs cellules piézo-électriques sont mises en circuit en parallèle et/ou en série..

3. Appareil radio de protection des personnes selon la revendication 1, caractérisé en ce que le dispositif générateur (11) présente en plus une bobine d'induction, dans laquelle un courant de recharge de l'accumulateur (10) peut être induit, par liaison avec un champ extérieur.

4. Appareil radio de protection des personnes selon l'une des revendications 1 à 3, caractérisé en ce que le dispositif générateur (11) est raccordé à l'accumulateur (10) en fonctionnement de recharge, par l'intermédiaire d'un circuit redresseur (14).

5. Appareil radio de protection des personnes selon l'une des revendications 1 à 4, caractérisé en ce que le circuit générateur (11) présente un amplificateur de tension et/ou un circuit limiteur (13, 15).

6. Appareil radio de protection des personnes selon l'une des revendications 1 à 5, caractérisé en ce que l'appareil de commande radio présente un récepteur (20), réagissant au moins à une fréquence prédéterminée, en actionnant des moyens de commutation (25), en vue d'activer le capteur (22, 23), et en ce que les moyens de commutation sont disposés dans le circuit électrique d'alimentation (16, 17) de l'émetteur, et ferment le circuit électrique d'alimentation entre l'accumulateur (10) et l'émetteur (22, 23), lorsque la au moins une fréquence prédéterminée et captée par le récepteur (20).

7. Appareil radio de protection des personnes selon la revendication 6, caractérisé en ce qu'un décodeur destiné à la discrimination entre les fréquences reçues est associé au récepteur (20).

8. Appareil radio de protection des personnes selon la revendication 6 ou 7, caractérisé en ce que le récepteur (20) est réalisé sous forme de composant à excitation extérieure, opérant une commutation des moyens de commutation (25) lors de la réception de la fréquence prédéterminée.
